# EUROPEAN PATENT APPLICATION

(11) **EP 3 572 999 A1**
(43) Date of publication of application: **27.11.2019**
(21) Application number: 18382353.3
(22) Date of filing: 23.05.2018
(51) Int. Cl.: G06Q 20/30, G06F 21/71, H04L 9/32, H04L 29/06

(54) **METHOD FOR AUTHORIZING OPERATIONS**

(71) Applicant: Banco Bilbao Vizcaya Argentaria, S.A., 48005 Bilbao (ES)
(72) Inventor: NAVARRETE SÁNCHEZ, Raúl, E-28050 Madrid (ES); SÁNCHEZ FERNÁNDEZ, Félix, E-28050 Madrid (ES); PADILLA JIMÉNEZ, Eduardo, E-28050 Madrid (ES); SÁNCHEZ GONZÁLEZ, Alberto, E-28050 Madrid (ES); SUÁREZ MÉNDEZ, Martín, E-28050 Madrid (ES); MAGAÑA ORUE, Sara, E-28050 Madrid (ES)
(74) Representative: ABG Intellectual Property Law, S.L.

(57) **Abstract**

The present invention relates to a computer-implemented method for authorizing the signature for operations by means of a signature service, particularly for authorizing the signature for banking operations.

## Description

### Object of the Invention

The present invention relates to a computer-implemented method for authorizing the signature for operations by means of a signature service, particularly for authorizing the signature for banking operations.

### Background of the Invention

Today, in order to perform a banking operation through the Internet, the banking entity in charge of said operation requests an electronic signature from the user. This signature requires an access identifier, for example, a personal identification number of the user, as well as an access password. Signature by means of said access password generally comprises two different steps: 1) authenticating the user by means of, for example, a password previously chosen by the user him/herself or by means of biometrics recognition, and 2) increasing the level of security by entering a code received in the terminal of the user, for example, by means of a short message (SMS) or an alphanumeric password given by a non-transferable coordinate card that is unique to each user.

Current access passwords have different associated security, operability, and accessibility problems:
- the signature for operations that call for reception of an SMS requires the telephone information to be kept up-to-date at all times, and what is more problematic is that it prevents the operations from being able to be carried out when the user has no telephone connection or is abroad, given that reception of said SMS is conditioned by line latencies and reception problems.
- the signature for operations that call for a coordinate card entails a significant security problem in the event of losing said card or of it being stolen. Furthermore, to be able to perform transactions anywhere, it is absolutely necessary for the user to carry said card (or a copy thereof) with him/her, which increases the risk of losing the access data or of it being stolen.
- in both cases, it must be taken into account that transactions are not transparent to the user given that he/she must participate actively in the process, causing it to be long and tedious.

The following invention proposes a solution to the preceding problems by means of a secure, convenient, and effective method for authorizing the signature for an operation.

### Description of the Invention

The present invention proposes a solution to the preceding problems by means of a computer-implemented method for authorizing the signature for operations according to claim 1, a data processing system according to claim 14, and a computer program product according to claim 15. The dependent claims define the preferred embodiments of the invention.

A first inventive aspect provides a *computer-implemented method for authorizing the signature for operations by means of a signature service, preferably banking operations, provided by a service provider to a terminal of a user, wherein*
- *the service provider comprises at least one server,*
- *the terminal of a user is previously validated by the service provider, preferably a banking entity, and configured for communicating with the at least one server of the service provider through the Internet,*
- *the terminal of a user is configured for storing the signature service,*
- *the signature service is configured for establishing the communication of the terminal of a user with the at least one server of the service provider, the signature service being activated in the terminal, and*
- *the signature service can only be activated by the user in only one terminal at the same time,*
*the method comprising the following steps:*
*a) requesting an operation from the service provider by a user,*
*b) requesting by the at least one server of the service provider the signature of the user in the terminal for authorizing the operation,*
*c) generating by the signature service a first one-time password or OTP in the terminal,*
*d) confirming the operation by the user in the terminal,*
*e) sending the first OTP to the at least one server of the service provider,*
*f) verifying by the at least one server of the service provider the first OTP, assigning in this case the operation as verified, and*
*g) if the server assigns the operation as verified, authorizing by said server the operation.*

Throughout this document, *signature for operations,* or simply *signature,* will be understood as the process of validating the identity of one or more parties involved in an operation.

Throughout this document, *service provider* will be understood as an entity with capacity to authorize secure operations telematically, such as a banking entity with Internet banking service, for example.

Throughout this document, *signature service* will be understood as the automated application which allows a user to complete the signature for operations telematically through a terminal.

Throughout this document, *terminal* will be understood as the physical device through which the user requests the signature for operations, for example, a mobile device.

Throughout this document, *operation* or *transaction* will be understood as the exchange of data between one or more parties. A particular example of an operation or transaction is a bank transfer, wherein the parties can be entities and/or users.

Advantageously, the signature authorization method allows a user to securely authorize an operation without requiring the service provider to send the user a password for each operation. Even more advantageously, the signature authorization method allows a user to authorize an operation without manually entering a code, for example, a code based on a system of coordinates.

In a particular embodiment, *the time of the terminal is synchronized with the local time of the location of the terminal.*

Advantageously, synchronizing the time of the terminal with the time of the location allows the user to authorize the signature for an operation when he/she is in a time zone different from the time zone of the server of the service provider, such that problems of latency or reception failure are prevented.

In a particular embodiment, *the terminal requires entering an access password for the use thereof, wherein the access password is an alphanumeric password or an unlock pattern.*

Advantageously, the user must enter a code or an unlock pattern before the signature authorization, such that the general level of security is increased. Therefore, in the event of the terminal being stolen, signature authorization would require an additional authentication step.

In a particular embodiment, *the terminal is a mobile telephone.*

Advantageously, the user can authorize the signature for an operation as long as he/she carries his/her mobile telephone with him/her.

In a particular embodiment, *the signature service is integrated in a computer application generated by the service provider.* More particularly, the signature service is integrated in a computer application of a banking entity.

Advantageously, a user can access the signature service in a simple and practical manner from a terminal, for example from a mobile telephone, in which an application of the service provider has already been installed, such that the user does not have to enter personal or private data in the signature service again.

In a particular embodiment, the *activation of the signature service comprises the following steps:*
*i). initiating the signature service in the terminal by the user,*
*ii). finding out if the user is authorized to use the signature service by at least one server, such that:*
   - *if the at least one server finds out that the user is authorized, initiating step a) of the authorization method; or*
   - *if the at least one server finds out that the user is not authorized, initiating by the at least one server an authorization process for authorizing the user.*

Advantageously, the activation of the signature service is only performed once for each terminal; once the signature service is activated, the authorization process for authorizing the user does not have to be initiated.

Furthermore, the authorization method allows greater security as it can be activated only in only one terminal at a time.

In a particular embodiment, if the user is authorized, the activation of the signature service in a second terminal of the user comprises the step of finding out by at least one server if there is a first validated terminal for the same user, wherein:
- if there is a validated terminal, finding out if the validated terminal coincides with the second terminal of the user,
- if the validated terminal is different from the second terminal, finding out if the signature service is activated in the first validated terminal,
- if the signature service is activated in the first validated terminal, deactivating the signature service in the first validated terminal and activating the signature service in the second terminal.

Therefore, in the event of the first terminal being misplaced, stolen, or breaking, the signature service could be deactivated from the first terminal and activated in the second terminal, preventing fraudulent operations.

In a particular embodiment, *the process for authorizing the user comprises the following steps:*
*ii.i). generating an activation password by the at least one server, said activation password being a second one-time password or OTP,*
*ii.ii). sending the activation password, preferably by means of a short message service (SMS), to the user by the at least one server,*
*ii.iii). entering the activation password in the signature service in the terminal by the user,*
*ii.iv). verifying the entry of the activation password in the signature service by the at least one server, and*
*ii.v). activating a seed by the at least one server, wherein the seed is associated with the user and comprised in the signature service.*

Throughout the following document *seed* will be understood as a data chain which allows a device to generate passwords, preferably pseudorandom passwords.

In a particular example, the seed is a unique alphanumeric string for each terminal and/or user.

In a particular embodiment, the at least one server sends a seed associated with the user to the terminal, and this seed is stored in the signature service.

Advantageously, the seed serves to validate a process both in the terminal and in the at least one server.

Advantageously, the authorization process allows an increase in overall process security due to the confluence of, on one hand, the use of a second OTP, and on the other hand, the use of the seed. Both the second OTP and the seed give randomness feature to the process.

In a particular embodiment, the step of finding out if there is a first validated terminal comprises, if the signature service is activated in a first validated terminal different from a second terminal of the user, deactivating the seed of the first terminal.

In a particular embodiment, *in the authorization process for authorizing the user the at least one server receives a user identifier and a terminal identifier.*

Advantageously, the use of identifiers for the user and for the terminal allows linking the former with the latter without possibility of error.

In another particular embodiment, *the terminal identifier is encrypted.*

Advantageously, the encryption of a terminal identifier prevents collision in the event that two or more terminals have the same terminal identifier or that an identifier is copied. In a particular embodiment, the terminal identifier is an IMEI identifier, and in another particular embodiment the encryption comprises applying a hash algorithm to the terminal identifier.

In another particular embodiment, *in step c) the first OTP is generated in the terminal from the activated seed in the terminal.*

Advantageously, the generation of the first OTP *(one time password)* from an activated seed in the terminal allows both the service provider and the terminal to generate the same first OTP without having to share the password through a given communication channel.

In another particular embodiment, the method of the first inventive aspect *comprises a step of sending to the user information about the generation of the first OTP.*

Advantageously, the user receives information about the progress of the operation.

In another particular embodiment, the method of the first inventive aspect *comprises performing the operation by the at least one server of the service provider after step g).*

Advantageously, if the signature authorization is positive, the service provider performs the operation or transaction. Even more advantageously, the transaction is performed such that the user only has to give his/her consent one time.

In a particular embodiment, the signature authorization process is transparent to the user. Transparent will be understood as the user not intervening in the process.

In another particular embodiment, the method of the first inventive aspect *comprises a step of sending to the user information about the operation having been performed after the step of performing the operation.*

Advantageously, the user is informed about the successful completion of the operation.

In a second inventive aspect, the invention provides a *data processing system comprising means for carrying out any of the described embodiments of the method of the first inventive aspect.*

In a third inventive aspect, the invention provides a *computer program product comprising instructions such that, when the program is run by a computer, it causes the computer to carry out any of the described embodiments of the method of the first inventive aspect.*

All the features and/or steps of methods described in this specification (including the claims, description, and drawings) can be combined in any combination, with the exception of the combinations of such mutually-excluding features.

### Description of the Drawings

These and other features and advantages of the invention will be better understood based on the following detailed description of a preferred embodiment given only by way of illustrative, non-limiting example with reference to the attached drawings.
Figure 1 shows a flow chart of the signature authorization method for an operation according to an embodiment of the present invention.
Figure 2 illustrates the communication flow of the signature authorization method.
Figure 3 shows a flow chart of the method of activation of the signature service according to a particular embodiment of the present invention.
Figure 4 illustrates the communication flow of the activation authorization method of the signature service.

### Detailed Description of the Invention

The present invention describes a computer-implemented method (100) for authorizing, by means of a signature service (3), the signature for operations with a service provider (4) through a terminal (2) of a user (1). For the user (1) to be able to use the signature service (3), the user (1) must first activate (300) the signature service (3) in the terminal (2) of the user (1) by means of an authorization process (400) for authorizing the user (1).

### Computer-implemented method (100) for authorizing the signature for operations by means of a signature service (3)

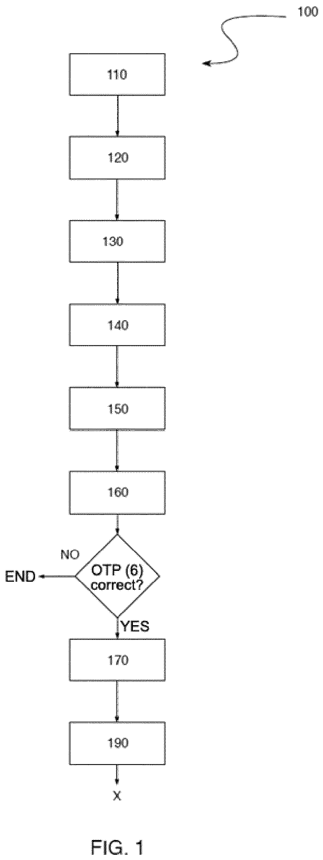

Figure 1 shows a flow chart of a particular example of the method (100) for authorizing the signature for operations by means of a signature service (3) provided by a service provider (4) to a terminal (2) of a user (1), the method (100) comprises the following steps:
a) requesting (110) an operation (X) from the service provider (4) by a user (1),
b) requesting (120) by the at least one server (5) of the service provider (4) the signature of the user (1) in the terminal (2) for authorizing the operation (X),
c) generating (130) by the signature service (3) a first one-time password or OTP (6) in the terminal (2),
d) confirming (140) the operation (X) by the user (1) in the terminal (2),
e) sending (150) the first OTP (6) to the at least one server (5) of the service provider (4),
f) verifying (160) by the at least one server (5) of the service provider (4) the first OTP (6), assigning in this case the operation (X) as verified, and
g) if the server (5) assigns the operation (X) as verified, authorizing (170) by said server (5) the operation (X).

For a user (1) to be able to request (120) an operation (x) through a signature service (3), the terminal (2) of a user (1) must have installed thereon this signature service (3) and must furthermore be previously validated by the service provider (4). Furthermore, for the user to be able to use the signature service (3), the terminal (2) must be connected to at least one server (5) comprised in the service provider (4). In this embodiment, the connection is performed through the Internet. The at least one server (5) and this terminal (2) of the user (1) can therefore be in data communication. Furthermore, the signature service (3) can only be activated by the user (1) in only one terminal (2) at the same time.

As shown in Figure 1, in step a) the user (1) requests (110) an operation (X) from the service provider (4) through the signature service (3). Once the user performs said request for operation (X), the at least one server (5) requests (120) from the user (1) the signature of the user (1) him/herself in the terminal (2) to thereby enable authorizing the operation (X). In step c), the signature service (3) generates (130) a first password OTP (6) in the terminal (2) of the user (1) by means of an active seed (8) stored in a software development kit (SDK) (21) of the terminal (2). Next, in step d) the user (1) confirms (140) the operation (X) in the terminal (2) such that the first OTP (6) is sent (150) to the server or servers (5). Once the at least one server (5) receives said first OTP (6), the at least one server (5) verifies (160) if said first OTP (6) is correct, assigning in this case the operation (X) as verified. If the first OTP (6) is incorrect, the operation (X) is not assigned as verified, and therefore cannot be completed. Finally, in step g) the at least one server authorizes (170) the performance of the operation (X).

In a particular example, in step c) the generation of the first OTP (6) is performed by means of a hardware security module (HSM); and in step f) the verification of the passwords is performed by means of the authentication standard OATH.

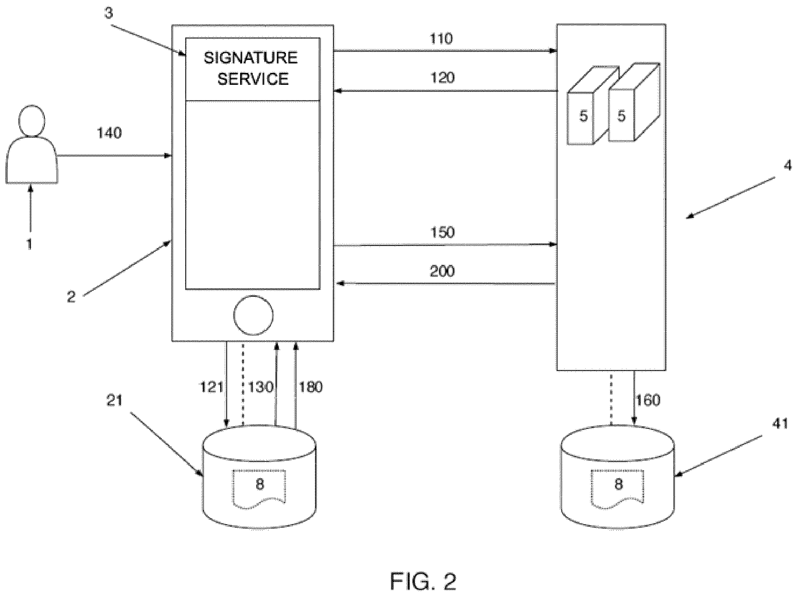

Figure 2 shows a communication flow of a particular example of the process for authorizing the signature by means of a signature service (3) with a service provider (4) through a terminal (2) of a user (1).

The terminal (2) of the user (1) has a signature service (3) installed thereon in the form of a mobile application. In turn, the terminal (2) comprises a SDK (21) in which a seed (8) which is activated is stored. For the user (1) to be able to use this terminal (2), the terminal (2) requires the user (1) to enter an access password. In this particular example, said access password is an alphanumeric password or an unlock pattern. Furthermore, in this example the time of the terminal (2) is synchronized with the local time of the location of the terminal (2).

The service provider (4) comprises a plurality of servers (5) and a client database (41). The same seed (8) which is found in the SDK (21) of the terminal (2) is stored in this database (41). In this particular example, the service provider (4) is a banking entity.

The terminal (2) of the user (1) and the service provider (4) are configured for communicating with one another through the Internet.

As shown in Figure 2, first the user (1) requests (110) an operation (X) from the service provider (4) through the signature service (3). In this particular example, the operation (X) requested by the user (1) is a bank transfer. Next, in step b) the plurality of servers (5) request (120) from the user (1) the signature thereof so that the bank transfer can be authorized. In step c), the signature service (3) generates (130) a first one-time password or OTP (6). To that end, the terminal (2) of a user (1) requests (121) the generation of the first OTP (6) from the SDK (21) and said SDK creates and sends (122) the first OTP (6) to the terminal (2) of a user (1), and in turn sends (180) information about the generation of said first OTP (6) to the terminal (2). The user (1) then receives a notification in the terminal (2) asking for his/her confirmation (140) to carry out the bank transfer. Once the user (1) agrees to performing the transfer, the first OTP (6) is sent (150) to the plurality of servers (5) of the service provider (4). In step f), the plurality of servers (5) verify (160) that the first OTP is correct and assign the verified condition to the transfer. Finally, since the transfer has been assigned as verified, the plurality of servers (5) authorize (170) the performance of the bank transfer, perform (190) the transfer, and inform (200) the user about the successful performance of the operation (X).

### Activation (300) of the signature service (3)

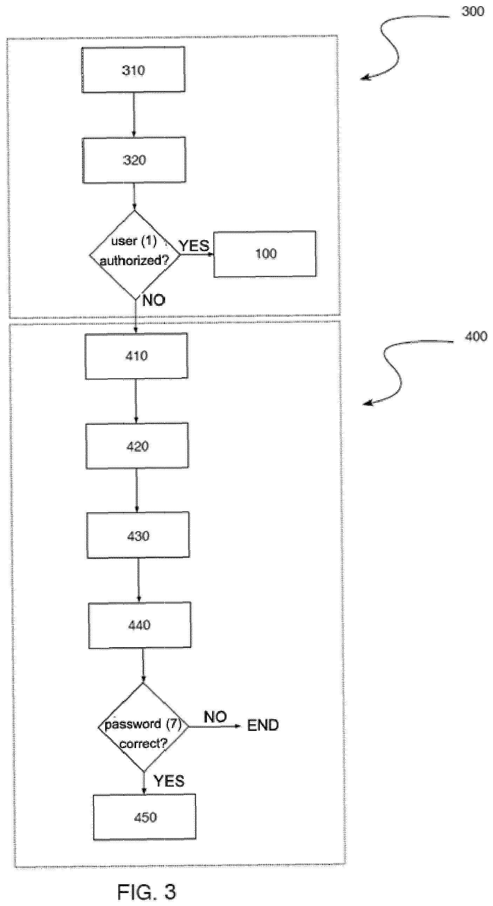

Figure 3 shows a flow chart of a particular example of the process of activating (300) the signature service (3) in only one terminal (2) of a user (1). The activation (300) of the signature service (3) comprises the following steps:
i). initiating (310) the signature service (3) in the terminal (2)by the user (1),
ii). finding out (320) if the user (1) is authorized to use the signature service (3)by at least one server (5), such that:
   - if the at least one server (5) finds out that the user (1) is authorized, initiating step a) of the authorization method; or
   - if the at least one server (5) finds out that the user (1) is not authorized, initiating by the at least one server (5) an authorization process (400) for authorizing the user (1).

In step i), the user initiates (310) the signature service (3) in his/her terminal (2); then the at least one server (5) of the service provider (4) finds out (320) if the user (1) is already authorized to use the signature service (3). Two situations may arise in this step ii) of finding out, i.e., either the user (1) is already authorized to use the signature service (3), so the user (1) may proceed directly with the petition for an operation (X), or the user (1) is not authorized, and the user (1) must subsequently be authorized by means of an authorization process (400).

If the user (1) is authorized, the server (5) finds out if there is already a validated terminal of the same user with the activated signature service (3). The simultaneous existence of two terminals of the user with the activated signature service (3) is thereby prevented. This process comprises:
- finding out if there is a first validated terminal,
- if there is a first validated terminal, finding out if it is different from the terminal (2) from which the signature service (3) is activated (300), which in this step will be referred to as the second terminal,
- if the first terminal is different from the second terminal (2), finding out if the signature service (3) is activated in the first terminal,
- finally, if the signature service (3) is activated in the first terminal, the server (5) deactivates the signature service (3) of the first terminal, and activates it in the second terminal (2). Additionally, the server (5) deactivates the seed of the first terminal to prevent fraudulent operations.

Figure 3 furthermore shows this authorization process (400) for authorizing the user (1) which comprises the following steps:
ii.i). generating (410) an activation password (7) by the at least one server (5), said activation password (7) being a second one-time password or OTP,
ii.ii). sending (420) the activation password (7), preferably by means of a short message service (SMS), to the user (1) by the at least one server (5),
ii.iii). entering (430) the activation password (7) in the signature service (3) in the terminal (2)by the user (1),
ii.iv). verifying (440) the entry of the activation password (7) in the signature service (3)by the at least one server (5), and
ii.v). activating (450) a seed by the at least one server (5) (8), wherein the seed (8) is associated with the user (1) and comprised in the signature service (3).

As shown in Figure 3, in step ii.i) the at least one server (5) of the service provider (4) generates (410) an activation password (7) which is a one-time password or OTP. Once said activation password (7) has been generated, in step ii.ii) the service provider (4) sends (420) this activation password (7) to the user (1) by means of a short message service (SMS). The user (1) receives in the terminal (2) an SMS comprising the activation password (7) generated in step ii.i). Next, the user (1) enters (430) said activation password (7) in the signature service (3) so that in step ii.iv) the at least one server (5) verifies (440) if the activation password (7) that has been entered is correct. If said activation password (7) is incorrect, the signature service (3) is not activated. Contrarily, if the activation password (7) is correct, the at least one server (5) sends a seed (8) to the terminal, which is stored in the memory of the signature service (3), and proceeds with the activation (450) of the seed (8). This seed (8), which is activated in the terminal (2) of the user (1), is the one which the signature service (3) will use to generate (130) first one-time passwords or OTPs (6) in the terminal (2) which allow authorizing operations (X) as indicated above. Since the seed (8) is active in the terminal (2) and in the server (5), signature authorization is verified both in the terminal (2) and in the server (5).

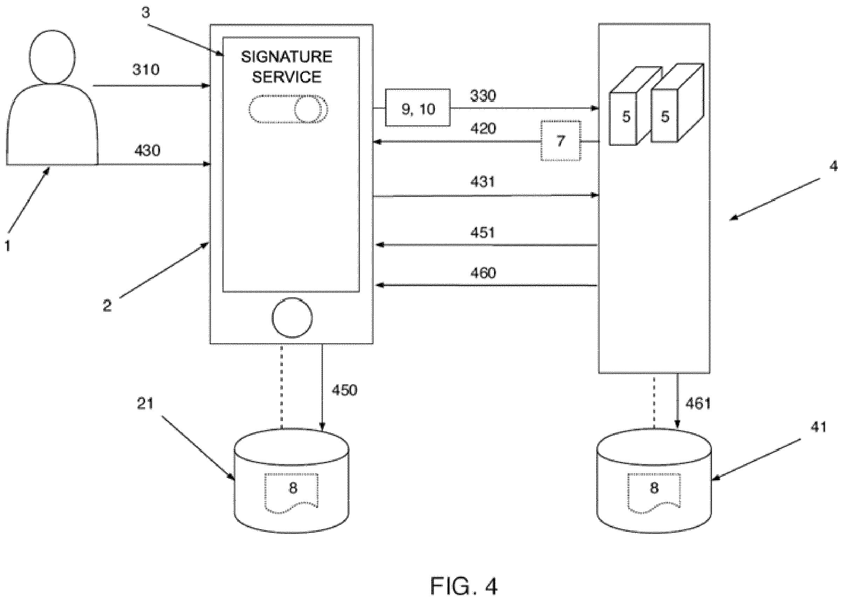

Figure 4 shows a flow chart of a particular example of the activation process (300) for activating the signature service (3) in the terminal (2) of a user (1). A user (1), a terminal (2) which is a mobile device, and a service provider (4), intervene in this activation process (300).

The terminal (2) of the user (1) has a signature service (3) installed thereon in the form of a mobile application. In turn, the terminal (2) comprises a software development kit (SDK) (21) in which a seed (8) which is initially deactivated is stored. For the user (1) to be able to use this terminal (2), the terminal (2) requires the user (1) to enter an access password. In this particular example, said access password is an alphanumeric password or an unlock pattern.

The service provider (4) comprises a plurality of servers (5) and a client database (41). The same seed (8) found in the SDK (21) of the terminal (2) is stored in this database (41). In this particular example, the service provider (4) is a banking entity.

The terminal (2) of the user (1) and the service provider (4) are configured for communicating with one another through the Internet.

As shown in Figure 4, the user first initiates (310) the signature service (3) in the terminal (2) by pressing on the activator (31) shown in said terminal (2). Then, the plurality of servers (5) find out (320) if the user (1) is authorized to use the signature service (3). In this particular example, the plurality of servers (5) find out (320) that the user (1) is not authorized, and an authorization process (400) for authorizing the user (1) is therefore initiated. In step i) of the initiation (310) of the signature service (2), two identifiers are sent (330) to the service provider (4).

The identifiers correspond with the user (1) and his/her terminal (2). In a particular example, the identifier of a user (1) is the bank account of the user (1) him/herself, and the terminal identifier (2) will vary depending on the operating system comprised in said terminal (2). For example, for a terminal (2) with an iOS operating system, IFVs (identifier for vendors) are used as the terminal identifier (2). On the other hand, for a terminal (2) with an Android operating system, its UID identifier is used. For both types of operating system, the identifiers of the terminal (2) are encrypted by means of hash functions.

In the authorization process (400) for authorizing the user (1), the plurality of servers (5) generate an activation password (7) which is a second one-time password (OTP); then, they send (420) it to the user (1) by means of a short message (SMS). The user (1) receives said second activation password (7) and enters (430) it in the signature service (3). Once this activation password (7) has been entered, it is sent (431) to the service provider (4) together with the identifiers of a user (1) and terminal (2). Next, the plurality of servers (5) verifies (440) that the user (1) has correctly entered the second activation password (7), and stores (461) said identifiers in the client database (41). Then, since the user (1) is authorized to use the signature service (3), the plurality of servers (5) proceed to activate (450) the seed (8) by sending (451) a petition for seed activation to the terminal (2) of the user (1). Finally, in this particular example the plurality of servers (5) sends (460) a notification to the user (1) informing him/her of the successful completion of the authorization process (400) for authorizing the user (1). Once the user (1) has been authorized, he/she will be able to request (110) an operation (X) from the service provider (4) through the signature service (3) anytime he/she wishes.

## Claims

1. A computer-implemented method (100) for authorizing the signature for operations by means of a signature service (3), preferably banking operations, provided by a service provider (4) to a terminal (2) of a user (1), wherein
• the service provider (4) comprises at least one server (5),
• the terminal (2) of a user (1) is previously validated by the service provider (4), preferably a banking entity, and configured for communicating with the at least one server (5) of the service provider (4) through the Internet,
• the terminal (2) of a user (1) is configured for storing the signature service (3),
• the signature service (3) is configured for establishing the communication of the terminal (2) of a user (1) with the at least one server (5) of the service provider (4), the signature service (3) being activated in the terminal (2), and
• the signature service (3) can only be activated by the user (1) in only one terminal (2) at the same time,
the method (100) comprising the following steps:
a) requesting (110) an operation (X) from the service provider (4) by a user (1),
b) requesting (120) by the at least one server (5) of the service provider (4) the signature of the user (1) in the terminal (2) for authorizing the operation (X),
c) generating (130) by the signature service (3) a first one-time password or OTP (6) in the terminal (2),
d) confirming (140) the operation (X) by the user (1) in the terminal (2),
e) sending (150) the first OTP (6) to the at least one server (5) of the service provider (4),
f) verifying (160) by the at least one server (5) of the service provider (4) the first OTP (6), assigning in this case the operation (X) as verified, and
g) if the server (5) assigns the operation (X) as verified, authorizing (170) by said server (5) the operation (X).

2. The method (100) according to claim 1, **characterized in that** the time of the terminal (2) is synchronized with the local time of the location of the terminal (2).

3. The method (100) according to any of the preceding claims, **characterized in that** the terminal (2) requires entering an access password for the use thereof, wherein the access password is an alphanumeric password or an unlock pattern.

4. The method (100) according to any of the preceding claims, **characterized in that** the terminal (2) is a mobile telephone.

5. The method (100) according to any of the preceding claims, **characterized in that** the signature service (3) is integrated in a computer application generated by the service provider (4).

6. The method (100) according to any of the preceding claims, **characterized in that** the activation (300) of the signature service (3) comprises the following steps:
i). initiating (310) the signature service (3) in the terminal (2) by the user (1),
ii). finding out (320) if the user (1) is authorized to use the signature service (3) by at least one server (5), such that:
- if the at least one server (5) finds out that the user (1) is authorized, initiating step a) of the authorization method; or
- if the at least one server (5) finds out that the user (1) is not authorized, initiating by the at least one server (5) an authorization process (400) for authorizing the user (1).

7. The method (100) according to claim 6, **characterized in that** the authorization process (400) for authorizing the user (1) comprises the following steps:
ii.i). generating (410) an activation password (7) by the at least one server (5), said activation password (7) being a second one-time password or OTP,
ii.ii). sending (420) the activation password (7), preferably by means of a short message service (SMS), to the user (1) by the at least one server (5),
ii.iii). entering (430) the activation password (7) in the signature service (3) in the terminal (2) by the user (1),
ii.iv). verifying (440) the entry of the activation password (7) in the signature service (3) by the at least one server (5), and
ii.v). activating (450) a seed (8) by the at least one server (5), wherein the seed (8) is associated with the user (1) and comprised in the signature service (3).

8. The method (100) according to claim 6 or 7, **characterized in that** in the authorization process (400) for authorizing the user (1) the at least one server (5) receives a user identifier (9) and a terminal identifier (10).

9. The method (100) according to claim 8, **characterized in that** the terminal identifier (10) is encrypted.

10. The method (100) according to any of claims 7 to 9, **characterized in that** in step c) the first OTP (6) is generated (130) in the terminal (2) from the activated seed (8) in the terminal (2).

11. The method (100) according to any of the preceding claims, **characterized in that** it comprises a step of sending (180) to the user (1) information about the generation of the first OTP (6).

12. The method (100) according to any of the preceding claims, **characterized in that** after step g) the method comprises performing (190) the operation (X) by the at least one server (5) of the service provider (4).

13. The method (100) according to claim 12, **characterized in that** after the step of performing (190) the operation (X), the method comprises the step of sending (200) to the user (1) information about the operation (X) having been performed.

14. A data processing system comprising means for carrying out the steps of the method (100) of any of the preceding claims.

15. Computer program product comprising instructions such that, when the program is run by a computer, it causes the computer to carry out the steps of the method (100) of any of claims 1 to 13.
